# EUROPÄISCHE PATENTSCHRIFT

(11) **EP 2 480 581 B1**
(45) Veröffentlichungstag und Bekanntmachung des Hinweises auf die Patenterteilung: **25.05.2016**
(21) Anmeldenummer: 10741979.8
(22) Anmeldetag: 12.08.2010
(51) Int. Cl.: C08F 220/18, C08F 220/28, C08F 220/60, C09D 133/14

(54) **WASSERDISPERGIERBARES, CYCLOCARBONATFUNKTIONALISIERTES VINYLCOPOLYMER-SYSTEM**
WATER DISPERSIBLE, CYCLOCARBONATE FUNCTIONALISED VINYL COPOLYMER SYSTEM
SYSTÈME EN VINYLE-COPOLYMÈRE FONCTIONNALISÉ PAR DU CYCLO-CARBONATE POUVANT ÊTRE DISPERSÉ DANS L'EAU

(30) Priorität: 25.09.2009 EP 09171362
(43) Veröffentlichungstag der Anmeldung: 01.08.2012
(73) Patentinhaber: Construction Research & Technology GmbH, 83308 Trostberg (DE)
(72) Erfinder: MECFEL-MARCZEWSKI, Joanna, 67117 Limburgerhof (DE); WALTHER, Burkhard, 84518 Garching (DE); MEZGER, Jochen, 67308 Lautersheim (DE); STAUDHAMER, Rosita, 84539 Ampfing (DE)
(86) Internationale Anmeldenummer: PCT/EP2010/061756
(87) Internationale Veröffentlichungsnummer: WO 2011/035982

(56) Entgegenhaltungen:
- EP-A1- 0 737 726
- WO-A1-97/23516
- JP-A- 9 278 982

## Beschreibung

Die vorliegende Erfindung betrifft ein wasserdispergierbares, cyclocarbonatfunktionalisiertes Vinylcopolymer-Bindemittel, ein Verfahren zur Herstellung des Bindemittels, eine wässrige Dispersion enthaltend das Bindemittel, ein System umfassend das Bindemittel, Wasser und einen Härter sowie die Verwendung des Bindemittels zur Herstellung einer gehärteten Beschichtung.

Zweikomponentensysteme auf Basis von Polyisocyanaten gehören zum Stand der Technik. Diese werden beispielsweise als Klebstoffe, Dichtstoffe, Vergussmassen, als Korrosionsschutz und für Beschichtungen verwendet. Vorteilhaft sind die hohe Säure-, Laugen- und Chemikalienbeständigkeit der so erhaltenen gehärteten Zusammensetzungen. Allerdings sind NCO -Gruppen gegen Feuchtigkeit empfindlich. Daher ist die Herstellung lagerstabiler, wasserbasierter Systeme auf der Basis von Isocyanaten nicht möglich. Des Weiteren sind monomere und niedermolekulare Isocyanatverbindungen toxikologisch bedenklich, insbesondere wenn diese leichtflüchtig sind oder migrieren. Polyurethane können auch ausgehend von cyclischen Carbonatverbindungen erhalten werden. Es ist bekannt, dass die Polymerisation von Vinylverbindungen, die cyclische Carbonatgruppen tragen, gegenüber den entsprechend unsubstituierten Vinylverbindungen auf Grund intramolekularer und intermolekularer Effekte dieser Gruppen stark beschleunigt ist (Macromolecules, 2008, 9035 - 9043). Cyclische Carbonatverbindungen sind zudem durch Amine vernetzbar.

Zur Herstellung von wasserbasierten Systemen ist eine ausreichende Dispergierbarkeit der Bindemittel in Wasser erforderlich. Man ist dazu übergegangen, die erforderlichen Emulgatoren chemisch in die Kette des Bindemittels einzubauen, um eine molekulare Dispergierbarkeit des Bindemittels zu erreichen.

WO 97/23516 A1 beschreibt eine wässrige, vernetzbare Beschichtungszusammensetzung, umfassend ein Polymersystem, das durch ein Verfahren vernetzbar ist, welches die Reaktion einer cyclischen Carbonatgruppe mit einer Amingruppe umfasst. Die Wasserdispergierbarkeit wird mit Hilfe von Carboxylatgruppen erreicht. Die Amingruppen werden durch Umsetzung von Carboxylatgruppen mit Aziridinen eingeführt. Die cyclischen Carbonatgruppen und die Amingruppen können an dieselbe oder an unterschiedliche Polymerketten gebunden sein. Als Polymersysteme werden Vinyladditionspolymere einschließlich (Meth)acrylatpolymeren sowie Polyurethane genannt.

Die Härtung dieses einkomponentigen Systems erfolgt allerdings bei erhöhten Temperaturen oder über längere Zeiträume bei Raumtemperatur. Aziridine sind in der Regel toxisch und krebserregend. Zudem weisen Carboxylatgruppen in wässriger Lösung erhöhte pH-Werte auf, was sich ungünstig auf die Hydrolysestabilität und damit die Lagerstabilität der wässrigen Dispersionen auswirken kann.

JP 09 278982 A beschreibt eine härtbare Harzzusammensetzung welche zumindest ein carbonatgruppenhaltiges Vinylpolymer, ein Polysiloxan mit einer am Si-Atom gebundenen OH -Gruppe bzw. hydrolysierbaren Gruppe und einen Härtungskatalysator umfasst. Obwohl in JP 09 278982 A Vinylpolymere, die lineare Carbonatgruppen enthalten, mit Vinylpolymeren, die cyclische Carbonatgruppen enthalten, in Verbindung gebracht werden, wird aus Absatz [0021] dieser Patentanmeldung rasch klar, dass es sich hier um zwei alternative Ausführungsformen des carbonatgruppenhaltigen Vinylpolymers handelt.

EP 0 737 726 A1 erwähnt in Tab.1 Glycerincarbonatmethacrylatester in Kombination mit anderen (Meth)Acrylat- und Vinylmonomeren, jedoch ohne Emulgatorkomponente.

Der vorliegenden Erfindung lag die Aufgabe zu Grunde, zumindest einige der Nachteile des oben genannten Standes der Technik im Wesentlichen zu überwinden. Insbesondere sollte ein wasserbasiertes Vinylcopolymer-Bindemittel ohne NCO -Gruppen und ohne die Verwendung von Aziridinen im Herstellungsverfahren zur Verfügung gestellt werden, das härtbare stabile wässrige Dispersionen mit hohen Feststoffgehalten ergibt. Die Lagerstabilität der wässrigen Dispersionen sollte kommerziellen Anforderungen genügen. Die Dispersionen sollten keine organischen Lösungsmittel oder zusätzliche Emulgatoren erfordern. Das Bindemittel sollte einfach herstellbar und verwendbar sein.

Diese Aufgaben werden mit den Merkmalen der unabhängigen Ansprüche gelöst. Die abhängigen Ansprüche beziehen sich auf bevorzugte Ausführungsformen.

Es wurde überraschend gefunden, dass ein Vinylcopolymer-Bindemittel mit in der Polymerkette eingebauten cyclischen Carbonatgruppen, bei dem die erfindungsgemäßen Emulgatorgruppen ebenfalls in die Polymerkette eingebaut sind, stabile wässrige Dispersionen mit einem Feststoffanteil von bis zu ≥ 30 Gew.-% ergibt.

Gegenstand der vorliegenden Erfindung ist ein wasserdispergierbares, cyclocarbonatfunktionalisiertes Vinylcopolymer-Bindemittel mit Baugruppen, die von i) mindestens einem Vinylmonomer (I) mit mindestens einer cyclischen Carbonatgruppe, ii) mindestens einem Vinylmonomer (II) mit mindestens einer Emulgatorgruppe und iii) gegebenenfalls mindestens einem copolymerisierbaren Vinylmonomer (III), das von den Monomeren (I) und (II) verschieden ist, abgeleitet sind.

Für die Zwecke der vorliegenden Erfindung soll unter "Vinylmonomer" eine ethylenisch ungesättigte Verbindung verstanden werden. "Vinylmonomere" umfassen daher auch Allylmonomere, Acrysäureester und Methacrylsäureester. Die Aussage, dass die Baugruppen von den entsprechenden Monomeren abgeleitet sind, umfasst zwar die Möglichkeit, dass die entsprechenden Monomere copolymerisiert werden, umfasst aber auch die Möglichkeit, dass die entsprechenden Baugruppen erst durch chemische Modifikation im Anschluss an eine Polymerisationsreaktion erhalten werden.

Die cyclische Carbonatgruppe ist insbesondere ein 5- oder 6-gliedriger Ring, vorzugsweise ein 2-Oxo-1,3-dioxolan-Ring.

Als Vinylmonomer (I) wird eine Verbindung der folgenden Formel bevorzugt, nämlich 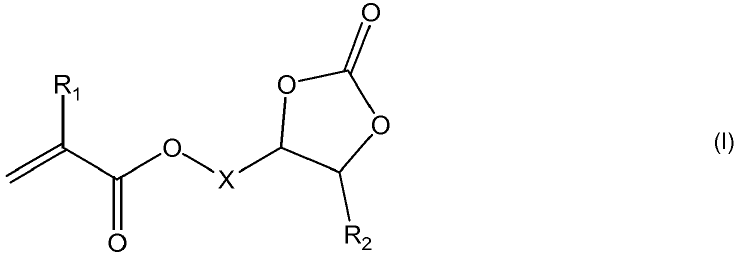 wobei
- R₁ =: H oder CH₃ ist;
- R₂ =: H, Alkyl, Aryl, Aralkyl oder Alkaryl ist, vorzugsweise H, C₁₋₈-Alkyl, C₆₋₁₄-Aryl, C₇₋₂₀-Aralkyl oder -Alkaryl, und insbesondere H ist;
- X =: Alkylen, Arylen, Aralkylen oder Alkarylen ist, welche gegebenenfalls (Poly)-ester-, (Poly)ether-, (Poly)amid-, (Poly)urethan- und/oder (Poly)carbonat-gruppen enthalten, vorzugsweise C₁₋₈-Alkylen, insbesondere Methylen.

Das Vinylmonomer (I) ist demnach einen (Meth)acrylsäureester. Mit der Bezeichnung "(Meth)acrylsäure" wird der Bedingung R₁ = H oder CH₃ Rechnung getragen, d.h. es kann sich sowohl um Acrylsäure als auch um Methacrylsäure handeln. Die Bezeichnung "(Poly)estergruppen" und dergleichen bedeutet, dass sowohl eine als auch mehrere Estergruppen in der Gruppe "X" enthalten sein können. Ein besonders bevorzugter Vertreter des Vinylmonomers (I) ist das Glycerincarbonatacrylat.

Das Vinylmonomer (I) hat vorzugsweise ein Molekulargewicht von 172 (im Falle von Glycerincarbonatacrylat) bis etwa 1.500. Im Rahmen der vorliegenden Erfindung wird Molekulargewichtsangaben die Einheit [g/mol] zu Grunde gelegt, auch wenn dies im Einzelfall nicht ausgeschrieben wird.

Die im Vinylmonomer (II) enthaltene Emulgatorgruppe ist eine nicht-ionische oder eine ionische Gruppe. Das Vinylmonomer (II) hat vorzugsweise ein Molekulargewicht von 88 (in Falle von Ethylenglykolmonovinylether) bis etwa 1.500.

Die Wasserdispergierbarkeit des Vinylcopolymer-Bindemittels kann mit nicht-ionischen Gruppen auf der Basis von Diolen oder (Poly)alkylenglykolen erreicht werden. Unter "Diol" soll hier eine Alkylengruppe verstanden werden, die an beliebigen Positionen insgesamt zwei OH -Gruppen trägt. Demgegenüber wird unter einem "Alkylenglykol" ein vicinales Diol verstanden (vorzugsweise Ethylen- und Propylenglykol, sowie Mischungen davon). Der Ausdruck "(Poly)" soll Monomere, Oligomere und Polymere bezeichnen.

Im Falle der nicht-ionischen Emulgatorgruppe ist das Vinylmonomer (II) demnach aus Vinylethern, Allylethern, Isoprenylethern und (Meth)acrylsäureestern von Diolen, vorzugsweise C₂₋₈-Diolen, oder von (Poly)alkylenglykolen, sowie Mischungen davon, ausgewählt, wobei die endständigen OH -Gruppen jeweils durch C₁₋₈-Alkoxygruppen substituiert sein können und die Diol- und (Poly)alkylenglykolreste jeweils (Poly)estergruppen in der Kette aufweisen können. Beispiele umfassen (Poly)ethylenglykol(meth)acrylate, (Poly)caprolacton(meth)acrylate, 4-Hydroxybutylvinylether, Ethylenglykolvinylether, Methyl(poly)ethylenglykol(meth)acrylate, (Meth)Acrylsäure-ω-Hydroxy-(C₁₂₋₂₄)-fettalkoholester-(C₂₋₃)(poly)alkoxylate und dergleichen.

Die Wasserdispergierbarkeit des Vinylcopolymer-Bindemittels wird vorzugsweise mit ionischen Gruppen erreicht, wobei die ionische Emulgatorgruppe eine Sulfat-, Sulfonat-, Phosphat- und/oder Phosphonatgruppe umfasst. Die ionische Emulgatorgruppe kann auch eine quaternäre Ammoniumgruppe umfassen.

Beispiele geeigneter Vinylmonomere (II) mit ionischen Gruppen sind u.a. Verbindungen der allgemeinen Formel (IV): 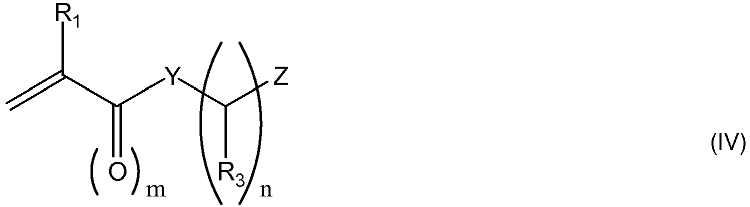 wobei
- R₁: die oben angegebene Beutung aufweist, d.h. H oder CH₃ ist;
- R₃ =: H, Alkyl, Aryl, Aralkyl oder Alkaryl ist, vorzugsweise H, C₁₋₈-Alkyl, C₆₋₁₄-Aryl, C₇₋₂₀-Aralkyl oder -Alkaryl, besonders bevorzugt CH₃ und H, und insbesondere H ist;
- Y =: O, CH₂, CH₂O, NH oder CH₂NH ist;
- Z =: OSO₃⁽⁻⁾, SO₃⁽⁻⁾, OPO₃⁽²⁻⁾, OPO₃H⁽⁻⁾, PO₃⁽²⁻⁾, PO₃H⁽⁻⁾ oder N(CH₃)₃⁽⁺⁾ ist, insbesondere SO₃⁽⁻⁾ und N(CH₃)₃⁽⁺⁾;
- m =: 0 oder 1 ist; und
- n =: 0 bis 10 ist.

Im Falle der Sulfat-, Sulfonat-, Phosphat- und/oder Phosphonatgruppen kommen als Gegenionen z.B. Alkaliionen, Erdalkaliionen und/oder Ammoniumionen in Frage; im Falle der quaternären Ammoniumgruppe z.B. Halogenidionen. Die quaternäre Ammoniumgruppe kann aber auch selbst das Gegenion zur anionischen Emulgatorgruppe sein, so dass die Emulgatorgruppe auch als zwitterionische Gruppe vorliegen kann, wie in Folgenden ausgeführt wird.

Geeignete Vinylmonomere (II) mit ionischen Gruppen sind u.a. auch die Ralu^{®}MER-Produkte der Fa. Raschig, wie z.B. die (3-Sulfopropyl)(meth)acrylate, die N,N-Dimethyl-N-(2-(meth)acryloyloxyethyl)-N-(3-sulfopropyl)ammoniumbetaine, die Polyethylenglykol-allyl-(3-sulfopropyl)-diether-Salze, die 3-(Meth)acrylamidopropyl-trimethylammoniumhalogenide, die 1-(3-Sulfopropyl)-2-vinylpyridinium- und 1-(3-Sulfopropyl)-4-vinylpyridiniumbetaine, aber auch Vinylphosphonate und Vinylsulfonat, das N,N-Dimethyl-N-(2-(meth)acryloyloxyethyl)-N-(2-sulfoethyl)ammoniumbetain der Fa. BASF SE, sowie die 2-Acrylamido-2-methylpropansulfonsäure (AMPS^{®}) der Fa. Lubrizol.

Im Falle anionischer Emulgatorgruppen kann das Vinylmonomer (II) als Salz oder als freie Säure eingesetzt werden, wobei im Falle der freien Säure anschließend in wässriger Lösung mit einer vorzugsweise stöchiometrischen Menge an Base neutralisiert wird (im Falle von Phosphat- bzw. Phosphonatgruppen vorzugsweise nur bis zur Monohydrogenphosphat- bzw. Monohydrogenphosphonatstufe).

Das copolymerisierbare Vinylmonomer (III) ist aus konjugierten Dienen, Vinylaromaten, Vinylhalogeniden, Vinylestern und Vinylethern, heterocyclischen Vinylverbindungen, (Meth)acrylsäureestern, (Meth)acrylsäure, (Meth)acrylamid, (Meth)acrylnitril, Estern monoethylenisch ungesättigter Dicarbonsäuren, sowie Mischungen davon, ausgewählt, vorzugsweise aus (Meth)acrylsäure-C₁₋₈-alkylester, (Meth)acrylsäure-C₆₋₁₄-arylester, (Meth)acrylsäure-C₇₋₂₀-aralkylester und Styrol. Es hat vorzugsweise ein Molekulargewicht von etwa 50 bis etwa 1.000.

Das erfindungsgemäße Bindemittel hat zweckmäßig ein mittleres Molekulargewicht (Mₙ) von 260 bis 2.000.000, vorzugsweise von 2.000 bis 1.000.000 und insbesondere von 5.000 bis 500.000.

Das erfindungsgemäße Bindemittel ist bevorzugt ein statistisches Copolymer. Die prozentuale Zusammensetzung des Bindemittels aus den einzelnen Baugruppen kann in weiten Grenzen variiert werden, wobei das Bindemittelmolekül im Durchschnitt natürlich mindestens eine von Monomer (I) und eine von Monomer (II) abgeleitete Baugruppe enthält. Es umfasst vorzugsweise 3 bis 96 Mol-% Baugruppen, die von Monomer (I) abgeleitet sind, 3 bis 96 Mol-% Baugruppen, die von Monomer (II) abgeleitet sind, und 0 bis 96 Mol-% Baugruppen, die von Monomer (III) abgeleitet sind.

Das erfindungsgemäße Bindemittel sollte mindestens 5 Gew.-%, vorzugsweise mindestens 10 Gew.-% und insbesondere mindestens 20 Gew.-% an Baugruppen umfassen, die von Monomer (II) abgeleitet sind, um eine hinreichende Wasserdispergierbarkeit aufzuweisen.

Im Wesentlichen liegen im erfindungsgemäßen Bindemittel keine Carboxylatgruppen vor, vorzugsweise nicht mehr als 5 Mol-%, besonders bevorzugt nicht mehr als 1 Mol-% und insbesondere nicht mehr als 0,5 Mol-% Carboxylatgruppen.

Des Weiteren enthalten die Monomere (II) und (III) im Wesentlichen keine mit cyclischen Carbonatgruppen reaktiven Gruppen, vorzugsweise nicht mehr als 5 Mol-% und insbesondere nicht mehr als 1 Mol-% reaktive Gruppen.

Ein weiterer Gegenstand der vorliegenden Erfindung ist ein Verfahren zur Herstellung des erfindungsgemäßen Bindemittels. Ein erfindungsgemäß bevorzugtes Verfahren beruht darauf, dass die Monomere (I), (II) und gegebenenfalls (III) radikalisch copolymerisiert werden. Hierzu wird eine Mischung der Monomere, gegebenenfalls zusammen mit einem radikalischen Initiator, in ein siedendes Lösungsmittel getropft, worauf das Lösungsmittel abdestilliert wird, das erhaltene Bindemittel in die wässrige Phase überführt und ionisierbare Emulgatorgruppen in die ionische Form überführt werden.

Ein besonderer Vorteil liegt hier in der bereits erwähnten leichten (Co)polymerisierbarkeit von Vinylmonomeren, die cyclische Carbonatgruppen enthalten. Die radikalische Copolymerisation erfolgt bevorzugt in einem sogenannten "Starved-Feed-Reactor".

Alternativ kann eine Mischung der Monomere, gegebenenfalls zusammen mit einem wasserlöslichen radikalischen Initiator, direkt in (heißem) Wasser copolymerisiert werden. Man erhält so unmittelbar eine erfindungsgemäße wässrige Dispersion.

Ein weiterer Gegenstand der vorliegenden Erfindung ist eine wässrige Dispersion, welche mindestens ein erfindungsgemäßes Bindemittel und Wasser umfasst. Es lassen sich wässrige Dispersionen mit einem Feststoffanteil von mindestens 10 Gew.-%, vorzugsweise mindestens 20 Gew.-% und insbesondere mindestens 30 Gew.-% herstellen.

Die Teilchengröße des in Wasser dispergierten Bindemittels liegt in der Größenordnung von ≤ 100 nm. Es wird von einer "Core-Shell"-Struktur der einzelnen Tröpfchen ausgegangen, wobei die ionischen Gruppen und vermutlich auch die cyclischen Carbonatgruppen in den äußeren Bereichen der Tröpfchen angeordnet sind.

Ein wesentlicher Vorteil gegenüber mit Carboxylatgruppen dispergierten Bindemitteln nach dem Stand der Technik liegt darin begründet, dass die erfindungsgemäßen ionischen Emulgatorgruppen wie z.B. Sulfonat- oder Hydrogenphosphonatgruppen weniger alkalisch als Carboxylatgruppen sind. Daher erfolgt in wässriger Dispersion eine langsamere Hydrolyse der cyclischen Carbonatgruppen, was die Lagerfähigkeit dieser Dispersionen begünstigt. So beträgt die Haltbarkeit der 30 Gew.-%igen wässrigen Dispersionen des Bindemittels typischerweise zumindest ein Jahr.

Auf Grund der vollständigeren Dissoziation und der höheren Ladungsdichte beispielsweise der Sulfonatgruppe ist es möglich, mit weniger Emulgator stabilere Dispersionen zu erhalten, was einen weiteren Vorteil der erfindungsgemäßen Bindemittel darstellt.

Ein weiterer Gegenstand der vorliegenden Erfindung ist ein System, welches zumindest ein erfindungsgemäßes Bindemittel, Wasser und mindestens einen Härter, sowie gegebenenfalls Katalysatoren, Zuschlagsstoffe und/oder Hilfsstoffe umfasst.

Der Härter ist vorzugsweise ein Amin. Auf Grund der hohen Reaktivität der cyclischen Carbonatgruppen mit Amingruppen wird das erfindungsgemäße System zweckmäßig als Zweikomponentensystem formuliert, in welchem die Bindemittelkomponente und Wasser bevorzugt die eine Komponente und der Härter bevorzugt die andere Komponente darstellen.

Das erfindungsgemäße System umfasst also neben der Bindemittelkomponente und Wasser noch vorzugsweise eine Aminkomponente (oder ein Gemisch aus zwei oder mehreren solcher Aminkomponenten), die mindestens eine HNR₃R₄ -Gruppierung aufweist, wobei R₃ und R₄ unabhängig voneinander H, aliphatische, aromatische, aliphatisch-aromatische, cycloaliphatische oder heterocyclische Gruppen sind, vorzugsweise H, C₁₋₈-Alkyl, C₆₋₁₄-Aryl, C₇₋₂₀-Aralkyl oder -Alkaryl oder C₅₋₈-Cycloalkyl, wobei R₃ und R₄ nicht gleichzeitig H sind, und R₃ und R₄ zusammengenommen ein cycloaliphatisches System, vorzugsweise einen 5 - 8-gliedirgen Ring, bilden können.

Das molare Verhältnis der cyclischen Carbonatgruppen zu den HNR₃R₄ -Gruppierungen beträgt zweckmäßig 20:1 bis 0,2:1, bevorzugt 10:1 bis 0,4:1, besonders bevorzugt 5:1 bis 0,5:1 und insbesondere 2:1 bis 0,5:1.

Die Aminkomponente kann niedermolekular oder hochmolekular sein. Das mittlere Molekulargewicht (Mₙ) einer niedermolekularen Aminkomponente beträgt zweckmäßig 45 (im Falle von Ethylamin) bis etwa 1.000, insbesondere 60 bis 300. Die Obergrenze des Molekulargewichtes einer hochmolekularen Aminkomponente liegt bei etwa 5.000.000, die Untergrenze bei etwa 1.000. Bevorzugt weist eine hochmolekulare Aminkomponente ein mittleres Molekulargewicht (Mₙ) von 800 bis 2.000.000 auf, insbesondere von 1.000 bis 1.000.000.

Monofunktionelle Amine eignen sich zum Abreagieren überschüssiger cyclischer Carbonatgruppen, während sich di- oder polyfunktionelle Amine zum Vernetzen der Bindemittelkomponente eignen. Die Aminkomponente kann sowohl linear als auch verzweigt sein. Das Gerüst der Aminkomponente kann aliphatische, aromatische, aliphatisch-aromatische, cycloaliphatische und heterocyclische Strukturen enthalten. Die Aminfunktion selbst ist aliphatisch, d.h. der Aminstickstoff ist nicht Teil eines aromatischen Rings.

Als monofunktionelle Amine werden niedermolekulare primäre und sekundäre Alkylamine, Arylamine, Aralkylamine, Alkarylamine und Cycloalkylamine bevorzugt.

Als difunktionelle Amine werden Alkylendiamine und/oder Cycloalkylendiamine bevorzugt, wie z.B. Diaminoethan, Diaminopropan, Diaminobutan, Diaminopentan, Diaminohexan, Diaminocyclopentan, Diaminocyclohexan, Diaminocycloheptan, Isophorondiamin und dergleichen. Isophorondiamin weist den zusätzlichen Vorteil der unterschiedlichen Reaktivitäten der beiden Amingruppen auf, was für eine Verlängerung der Topfzeiten ausgenutzt werden kann.

Als polyfunktionelle Amine werden aminfunktionalisierte Polyalkylenglykole bevorzugt, wie z.B. die Jeffamine^{®} der Fa. Huntsman Corp., z.B. die Jeffamine D-230, D-400, D-2000, D-4000, T-403, T-3000, T-5000, ED-600, ED-2003, oder Amine der allgemeinen Formel H₂N-(CH₂CH₂-NH)ₒ-CH₂CH₂-NH₂ mit o = 1 bis 10 wie z.B. Diethylentriamin. Als hochmolekulare Aminkomponente werden Polymere bevorzugt, die ausgewählt sind aus Polyaminen, dendritischen Polyaminen, Polyiminen (wie z.B. den Polyethyleniminen des Typs Lupasol^{®} der Firma BASF SE), Polyamiden, Polyaminoamiden, Polyurethanen, Polyvinylaminen oder Mischungen davon.

Es stellt einen besonderen Vorteil dar, dass im erfindungsgemäßen System kein organisches (Co-)Lösungsmittel bzw. "Coalescent" benötigt wird. Das erfindungsgemäße System kann ausschließlich auf Wasserbasis formuliert werden, wobei geringe Mengen eines kompatiblen inerten Lösungsmittels sicher nicht stören würden, im Hinblick auf gesundheitliche Aspekte, die Umwelt und die Arbeitsplatzsicherheit aber vermieden werden sollten. Aus diesem Grunde ist die Aminkomponente vorzugsweise flüssig und/ oder hinreichend wasserlöslich, damit auf den Einsatz organischer Lösungsmittel verzichtet und dennoch eine einfache Vermischbarkeit der Komponenten erreicht werden kann.

In einer besonderen Ausführungsform umfasst das erfindungsgemäße System einen Katalysator zur Beschleunigung der Reaktion der cyclischen Carbonatgruppen mit den Amingruppen. Hierbei handelt es sich zweckmäßig um eine katalytisch wirksame Menge einer Base, wie z.B. eines Alkalihydroxids. Der Katalysator kann in der Dispersion der Bindemittelkomponente oder in der Aminkomponente enthalten sein.

Das erfindungsgemäße System umfasst gegebenenfalls noch an sich bekannte Zuschlagstoffe und/oder Hilfsstoffe. Diese können in der Dispersion der Bindemittelkomponente oder in der Aminkomponente enthalten sein oder auch erst nach dem Vermischen der beiden Komponenten zugegeben werden. Als Zuschlagsstoffe werden zweckmäßig Salze wie z.B. Magnesiumchlorid, Calciumchlorid, Calciumsulfat, Bariumsulfat; Anhydrit, Gips, Kreide; Oxide wie z.B. Siliciumdioxid, Aluminiumoxid; Hydroxide wie z.B. Magnesiumhydroxid, Aluminiumhydroxid; Farbpigmente wie z.B. Titandioxid, Eisenoxid; Kohlenstoff wie z.B. Ruß, Graphit, Blähgraphit; Metallpigmente wie z.B. Aluminium; wasseraufnehmende Füllstoffe wie z.B. Zement; Alumosilikate wie z.B. Talk, Kaolin und dergleichen eingesetzt. Als Hilfsstoffe können die üblichen Weichmacher, Stabilisatoren, UV-Absorber, Antioxidationsmittel, Entschäumungsmittel, Benetzungsadditive und dergleichen eingesetzt werden.

Ein weiterer Gegenstand der vorliegenden Erfindung ist die Verwendung des erfindungsgemäßen Bindemittels zur Herstellung einer gehärteten Beschichtung, insbesondere zum Einsatz als wässriger Klebstoff, Dekorbeschichtung, Innen- bzw. Außenraumbeschichtung, Bodenbeschichtung, Korrosionsschutz, "Topcoats", "Basecoats", auch in dicken Schichten.

Die Härtung des Systems erfolgt nach der Vermischung der Komponenten durch die Reaktion der Amingruppen mit den cyclischen Carbonatgruppen. Die Topfzeit liegt in der Größenordnung von einigen Minuten bis mehreren Stunden, vorzugsweise im Bereich von etwa einer halben Stunde bis etwa einer Stunde. Die Härtung erfolgt bei 0 °C bis 50 °C, vorzugsweise bei 10 °C bis 40 °C und insbesondere bei Raumtemperatur. Das System ist vorzugsweise bereits nach einer halben Stunde aufgetrocknet und nach spätestens 24 Stunden blockfest ausgehärtet.

Die vorliegende Erfindung wird nun anhand der folgenden Beispiele näher erläutert:

### Beispiele

### Herstellungsbeispiel 1

7,0 g Benzylmethacrylat, 1,0 g Glycerincarbonatacrylat, 2,0 g 3-Acrylamidopropyltrimethylamoniumchlorid (Emulgator), 1,0 g Dibenzoylperoxid (Initiator) und 15 ml Methoxypropanol wurden gemischt und gerührt, bis eine homogene Mischung entstand. In einem 250 ml Kolben wurden 30 ml Methoxypropanol am Rückfluss gekocht. Dazu wurde die homogene Mischung mit der Geschwindigkeit 10 ml/h zugetropft. Anschließend wurde noch 15 Minuten am Rückfluss gekocht. Danach wurde das Methoxypropanol abdestilliert. Das entstandene Polymer wurde in 40 ml Aceton gelöst. Zu dieser Lösung wurden 20 ml Wasser zugegeben. Von dieser Mischung wurde das Aceton abdestilliert. Die so entstandene wässrige Dispersion wies einen Feststoffanteil von 30 Gew.-% auf.

### Herstellungsbeispiel 2

4,0 g Benzylmethacrylat, 3,0 g Methylmethacrylat, 1,0 g Glycerincarbonatacrylat, 2,0 g 3-Acrylamidopropyltrimethylamoniumchlorid (Emulgator), 1,0 g Dibenzoylperoxid (Initiator) und 15 ml Methoxypropanol wurden gemischt und gerührt, bis eine homogene Mischung entstand. In einem 250 ml Kolben wurden 30 ml Methoxypropanol am Rückfluss gekocht. Dazu wurde die homogene Mischung mit der Geschwindigkeit 10 ml/h zugetropft. Anschließend wurde noch 15 Minuten am Rückfluss gekocht. Danach wurde das Methoxypropanol abdestilliert. Das entstandene Polymer wurde in 40 ml Aceton gelöst. Zu dieser Lösung wurden 20 ml Wasser zugegeben. Von dieser Mischung wurde das Aceton abdestilliert. Die so entstandene wässrige Dispersion wies einen Feststoffanteil von 30 Gew.-% auf.

### Herstellungsbeispiel 3

3,0 g Benzylmethacrylat, 3,0 g Methylmethacrylat, 1,0 g Acrylsäure, 1,0 g Glycerincarbonatacrylat, 2,0 g 3-Acrylamidopropyltrimethylamoniumchlorid (Emulgator), 1,0 g Dibenzoylperoxid (Initiator) und 15 ml Methoxypropanol wurden gemischt und gerührt, bis eine homogene Mischung entstand. In einem 250 ml Kolben wurden 30 ml Methoxypropanol am Rückfluss gekocht. Dazu wurde die homogene Mischung mit der Geschwindigkeit 10 ml/h zugetropft. Anschließend wurde noch 15 Minuten am Rückfluss gekocht. Danach wurde das Methoxypropanol abdestilliert. Das entstandene Polymer wurde in 40 ml Aceton gelöst. Zu dieser Lösung wurden 20 ml Wasser zugegeben. Von dieser Mischung wurde das Aceton abdestilliert. Die so entstandene wässrige Dispersion wies einen Feststoffanteil von 30 Gew.-% auf.

### Herstellungsbeispiel 4

3,0 g Benzylmethacrylat, 3,0 g Methylmethacrylat, 2,0 g Glycerincarbonatacrylat, 2,0 g 3-Acrylamidopropyltrimethylamoniumchlorid (Emulgator), 1,0 g Dibenzoylperoxid (Initiator) und 15 ml Methoxypropanol wurden gemischt und gerührt, bis eine homogene Mischung entstand. In einem 250 ml Kolben wurden 30 ml Methoxypropanol am Rückfluss gekocht. Dazu wurde die homogene Mischung mit der Geschwindigkeit 10 ml/h zugetropft. Anschließend wurde noch 15 Minuten am Rückfluss gekocht. Danach wurde das Methoxypropanol abdestilliert. Das entstandene Polymer wurde in 40 ml Aceton gelöst. Zu dieser Lösung wurden 20 ml Wasser zugegeben. Von dieser Mischung wurde das Aceton abdestilliert. Die so entstandene wässrige Dispersion wies einen Feststoffanteil von 30 Gew.-% auf.

### Herstellungsbeispiele 5-6

Die Herstellungsbeispiele 3 und 4 wurden mit im Wesentlichen gleichen Ergebnissen wiederholt, wobei (3-Sulfopropyl)-acrylat-Kaliumsalz (Ralu^{®}MER SPA) als Emulgatorkomponente verwendet wurde.

### Herstellungsbeispiel 7

1,0 g (3-Sulfopropyl)-methacrylat-Kaliumsalz (Ralu^{®}MER SPM) wurden in 20 g 1-Methoxy-2-propanol und 1,0 g Wasser gelöst. Zu dieser Lösung gab man unter Rühren Benzylmethacrylat (4,5 g), Methylmethacrylat (4,0 g), Glycerincarbonatacrylat (1,0 g) und Dibenzoylperoxid (1,0 g). Die so erhaltene Lösung wurde über einen Zeitraum von ca. 4 Stunden in 15 g siedendes1-Methoxy-2-propanol getropft. Man ließ noch eine halbe Stunde bei Siedetemperatur rühren. Anschließend wurde das Lösungsmittel im Vakuum abdestilliert. Man erhielt nach Abkühlen auf Raumtemperatur einen hellgelben, minimal trüben Feststoff. Auswaage: 10,4 g. Der Rückstand wurde in 40 ml Aceton gelöst; anschließend wurden portionsweise 20 g Wasser untergemischt. Im Rotationsverdampfer wurde das Aceton vollständig entfernt. Nach dem Abkühlen auf Raumtemperatur blieb eine stabile, weiße, niedrigviskose Dispersion zurück. Auswaage: 30,3 g, Feststoffgehalt: 31,74 Gew.-%, Molekulargewicht (Mn): 1100g/mol, PDI: 1.8 (THF-GPC).

### Herstellungsbeispiel 8

a) Zu siedendem 1-Methoxy-2-propanol (20 g) wurde eine Mischung aus Benzylmethacrylat (2,0 g), Methylmethacrylat (4,0 g), Glycerincarbonatacrylat (2,0 g), 3-Methacrylamidopropyltrimethylammoniumchlorid ("Dimapaquat"; 2,0 g), Dibenzoylperoxid (1,0 g) und 15 g 1-Methoxy-2-propanol unter Rühren mit ca. 10 ml/h zudosiert. Anschließend wurde noch eine halbe Stunde (insgesamt ca. 3,5 h) am Rückfluss gekocht. Dann wurde das Lösungsmittel am Rotationsverdampfer vollständig abdestilliert. Man erhielt 9,9 g einer dunkelgelben bis hellorangen, leicht trüben Flüssigkeit (bei Raumtemperatur fest). Der Rückstand wurde in 40 ml Aceton gelöst. Unter Schwenken wurden portionsweise 20 g Wasser untergemischt. Das Aceton wurde am Rotationsverdampfer vollständig entfernt; das Produkt wurde auf Raumtemperatur abgekühlt. Man erhielt 29,8 g einer orangefarbenen, trüben, selbst bei Raumtemperatur stabilen Dispersion. (Die Dispersion blieb selbst nach mehreren Tagen Lagerung bei Raumtemperatur stabil.)
b) Der Ansatz a) wurde ohne 3-Methacrylamidopropyltrimethylammoniumchlorid wiederholt. Man erhielt 8,8 g einer gelben bis hellorangen, leicht trüben Flüssigkeit, die bei Raumtemperatur fest wurde. Der Rückstand wurde in 40 ml Aceton gelöst. Unter Schwenken wurden portionsweise 20 g Wasser untergemischt, wobei ein weißer Niederschlag entstand. Das Aceton wurde am Rotationsverdampfer vollständig entfernt und das Produkt wurde auf Raumtemperatur abgekühlt. Man erhielt 28,5 g eines Zweiphasengemischs mit einer weißen bis hellgelben, trüben, hochviskosen, bei RT festen unteren Phase und einer klaren oberen Wasserphase.
c) Der Ansatz a) bzw. b) wurde wiederholt, wobei 2,0 g 3-Methacrylamidopropyltrimethylammoniumchlorid erst nach dem Lösen in Aceton zugegeben wurden. Dieses 3-Methacrylamidopropyltrimethylammoniumchlorid löste sich indessen nicht, sondern setzte als untere Phase ab. Unter Schwenken wurden portionsweise 20 g Wasser untergemischt. Nach ca. 25 min waren immer noch 2 Phasen erkennbar (obere, weißliche, leicht trübe Phase und gelbliche, hochviskose untere Phase). Das Aceton wurde vollständig am Rotationsverdampfer entfernt und das Produkt wurde auf Raumtemperatur abgekühlt. Man erhielt 28,7 g eines Zweiphasengemischs mit einer weißen bis hellgelben, trüben, hochviskosen, bei RT festen unteren Phase und einer klaren oberen Wasserphase.
   Die Ansätze a), b) und c) zeigen deutlich, dass die Emulgatorkomponente in das Polymer einpolymerisiert sein muss, um ihre emulgierende Wirkung zu entfalten. Eine identische Menge an nicht in das Polymer einpolymerisierten Emulgatorkomponente zeigt keine Wirkung.
d) Der Ansatz a) wurde mit nur 1,0 g (d.h. ca. 10 Gew.-%) 3-Methacrylamidopropyltrimethylammoniumchlorid wiederholt. Auch hier erhielt man noch stabile wässrige Dispersionen, wenngleich sich die Ergebnisse nur noch schwer reproduzieren ließen.

### Anwendungsbeispiel 1

Zu 100 g der 30 Gew.-%igen Bindemitteldispersion nach Herstellungsbeispiel 1 wurden 0,25 g eines Silikonentschäumers (BYK-028 der Fa. Byk-Chemie GmbH), 0,5 g eines Benetzungsadditivs auf Silikonbasis (BYK-333 der Fa. Byk-Chemie GmbH) und 0,1 g eines Antioxidationsmittels (handelsübliches Butylhydroxytoluol (BHT)) gegeben und gerührt. Zu dieser Mischung wurden 5 g Isophorondiamin in 5 g Wasser gegeben und 3 Minuten bei 300 U/min gerührt. Die Mischung wurde als 100 µm dicke Schicht auf einer Polyethylenfolie bei Raumtemperatur aushärten gelassen. Nach 24 h wurde eine trockene, klare, klebe- und blockfreie Schicht erhalten.

### Anwendungsbeispiel 2

Zu 100 g der 30 Gew.-%igen Bindemitteldispersion nach Herstellungsbeispiel 2 wurden 0,25 g eines Silikonentschäumers (BYK-028 der Fa. Byk-Chemie GmbH), 0,5 g eines Benetzungsadditivs auf Silikonbasis (BYK-333 der Fa. Byk-Chemie GmbH) und 0,1 g eines Antioxidationsmittels (handelsübliches Butylhydroxytoluol (BHT)) gegeben und gerührt. Zu dieser Mischung wurden 2 g Diethylentriamin und 3 g Jeffamin D-148 in 5 g Wasser gegeben und 3 Minuten bei 300 U/min gerührt. Die Mischung wurde als 100 µm dicke Schicht auf einer Polyethylenfolie bei Raumtemperatur aushärten gelassen. Nach 24 h wurde eine trockene, klare, klebe- und blockfreie Schicht erhalten.

### Anwendungsbeispiel 3

Zu 100 g der 30 Gew.-%igen Bindemitteldispersion nach Herstellungsbeispiel 1 wurden 0,25 g eines Silikonentschäumers (BYK-028 der Fa. Byk-Chemie GmbH), 0,5 g eines Benetzungsadditivs auf Silikonbasis (BYK-333 der Fa. Byk-Chemie GmbH) und 0,1 g eines Antioxidationsmittels (handelsübliches Butylhydroxytoluol (BHT)) gegeben und gerührt. Zu dieser Mischung wurden 2 g Diethylentriamin und 3 g Isophorondiamin in 5 g Wasser gegeben und 3 Minuten bei 300 U/min gerührt. Die Mischung wurde als 100 µm dicke Schicht auf einer Polyethylenfolie bei Raumtemperatur aushärten gelassen. Nach 24 h wurde eine trockene, klare, klebe- und blockfreie Schicht erhalten.

## Patentansprüche

1. Wasserdispergierbares, cyclocarbonatfunktionalisiertes Vinylcopolymer-Bindemittel mit von
i) mindestens einem Vinylmonomer (I) mit mindestens einer cyclischen Carbonatgruppe,
ii) mindestens einem Vinylmonomer (II) mit mindestens einer Emulgatorgruppe und
iii) gegebenenfalls mindestens einem copolymerisierbaren Vinylmonomer (III), das von den Monomeren (I) und (II) verschieden ist,
abgeleiteten Baugruppen.

2. Bindemittel nach Anspruch 1, **dadurch gekennzeichnet, dass** die cyclische Carbonatgruppe ein 5- oder 6-gliedriger Ring ist, vorzugsweise ein 2-Oxo-1,3-dioxolan-Ring.

3. Bindemittel nach Anspruch 1 oder 2, **dadurch gekennzeichnet, dass** das Monomer (I) 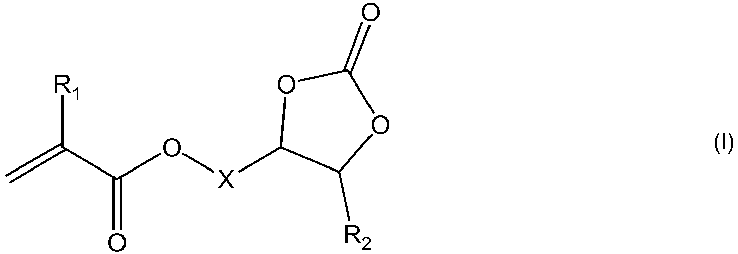 ist, wobei
R₁ = H oder CH₃ ist;
R₂ = H, Alkyl, Aryl, Aralkyl oder Alkaryl ist, vorzugsweise H, C₁₋₈-Alkyl, C₆₋₁₄-Aryl, C₇₋₂₀-Aralkyl oder -Alkaryl, und insbesondere H ist;
X = Alkylen, Arylen, Aralkylen oder Alkarylen ist, welche gegebenenfalls (Poly)-ester-, (Poly)ether-, (Poly)amid-, (Poly)urethan- und/oder (Poly)carbonatgruppen enthalten, vorzugsweise C₁₋₈-Alkylen, insbesondere Methylen.

4. Bindemittel nach Anspruch 3, **dadurch gekennzeichnet, dass** das Monomer (I) ein Molekulargewicht von 172 bis 1.500 aufweist.

5. Bindemittel nach einem der Ansprüche 1 - 4, **dadurch gekennzeichnet, dass** die Emulgatorgruppe eine nicht-ionische oder eine ionische Gruppe ist und das Monomer (II) ein Molekulargewicht von 88 bis 1.500 aufweist.

6. Bindemittel nach Anspruch 5, **dadurch gekennzeichnet, dass** das Monomer (II) im Falle einer nicht-ionischen Emulgatorgruppe aus Vinylethern, Allylethern, Isoprenylethern und (Meth)acrylsäureestern von Diolen, vorzugsweise C₂₋₈-Diolen, oder von (Poly)alkylenglykolen, sowie Mischungen davon, ausgewählt ist, wobei die endständigen OH -Gruppen jeweils durch C₁₋₈-Alkoxygruppen substituiert sein können und die Diol- und (Poly)alkylenglykolreste jeweils (Poly)estergruppen in der Kette aufweisen können.

7. Bindemittel nach Anspruch 5, **dadurch gekennzeichnet, dass** die ionische Emulgatorgruppe eine Sulfat-, Sulfonat-, Phosphat- und/oder Phosphonatgruppe umfasst.

8. Bindemittel nach Anspruch 5 oder 7, **dadurch gekennzeichnet, dass** die ionische Emulgatorgruppe eine quaternäre Ammoniumgruppe umfasst.

9. Bindemittel nach einem der Ansprüche 1 - 8, **dadurch gekennzeichnet, dass** das copolymerisierbare Vinylmonomer (III) aus konjugierten Dienen, Vinylaromaten, Vinylhalogeniden, Vinylestern und Vinylethern, heterocyclischen Vinylverbindungen, (Meth)acrylsäureestern, (Meth)acrylsäure, (Meth)acrylamid, (Meth)acrylnitril, Estern monoethylenisch ungesättigter Dicarbonsäuren, sowie Mischungen davon, ausgewählt ist, vorzugsweise aus (Meth)acrylsäure-C₁₋₈-alkylester, (Meth)-acrylsäure-C₆₋₁₄-arylester, (Meth)acrylsäure-C₇₋₂₀-aralkylester und Styrol.

10. Bindemittel nach Anspruch 9, **dadurch gekennzeichnet, dass** das Monomer (III) ein Molekulargewicht von 42 bis 1.000 aufweist.

11. Bindemittel nach einem der Ansprüche 1 - 10 mit einem mittleren Molekulargewicht (Mₙ) von 260 bis 2.000.000, vorzugsweise von 2.000 bis 1.000.000 und insbesondere von 5.000 bis 500.000.

12. Bindemittel nach einem der Ansprüche 1 - 11 mit von
3 bis 96 Mol-% von Monomer (I),
3 bis 96 Mol-% von Monomer (II) und
0 bis 96 Mol-% von Monomer (III)
abgeleiteten Baugruppen.

13. Bindemittel nach einem der Ansprüche 1 - 12, **dadurch gekennzeichnet, dass** im Wesentlichen keine Carboxylatgruppen im Bindemittel vorliegen, vorzugsweise nicht mehr als 5 Mol-% Carboxylatgruppen, besonders bevorzugt nicht mehr als 1 Mol-% und insbesondere nicht mehr als 0,5 Mol-% Carboxylatgruppen.

14. Bindemittel nach einem der Ansprüche 1 - 13, **dadurch gekennzeichnet, dass** die Monomere (II) und (III) im Wesentlichen keine mit cyclischen Carbonatgruppen reaktiven Gruppen enthalten, vorzugsweise nicht mehr als 5 Mol-% und insbesondere nicht mehr als 1 Mol-% reaktive Gruppen.

15. Verfahren zur Herstellung des Bindemittels gemäß der Definition mindestens eines der vorausgehenden Ansprüche, **dadurch gekennzeichnet, dass** die Monomere (I), (II) und gegebenenfalls (III) radikalisch copolymerisiert werden.

16. Verfahren nach Anspruch 15, **dadurch gekennzeichnet, dass** die Polymerisation erfolgt, indem eine Mischung der Monomere, gegebenenfalls zusammen mit einem radikalischen Initiator, in ein siedendes Lösungsmittel getropft wird, worauf das Lösungsmittel abdestilliert wird, das erhaltene Bindemittel in die wässrige Phase überführt und ionisierbare Emulgatorgruppen in die ionische Form überführt werden.

17. Verfahren nach Anspruch 15, **dadurch gekennzeichnet, dass** die Polymerisation erfolgt, indem eine Mischung der Monomere, gegebenenfalls zusammen mit einem wasserlöslichen radikalischen Initiator, direkt in Wasser copolymerisiert wird.

18. Wässrige Dispersion, umfassend mindestens ein Bindemittel gemäß der Definition eines der Ansprüche 1 - 14 und Wasser.

19. Wässrige Dispersion nach Anspruch 18 mit einem Feststoffanteil von mindestens 10 Gew.-%, vorzugsweise mindestens 20 Gew.-% und insbesondere mindestens 30 Gew.-%.

20. System, umfassend mindestens ein Bindemittel gemäß der Definition eines der Ansprüche 1 - 14, Wasser und mindestens einen Härter, sowie gegebenenfalls Katalysatoren, Zuschlagsstoffe und/oder Hilfsstoffe.

21. System nach Anspruch 20, **dadurch gekennzeichnet, dass** es sich um ein Zweikomponentensystem handelt, vorzugsweise mit einer von den anderen Komponenten getrennten Härterkomponente.

22. System nach Anspruch 20 oder 21, **dadurch gekennzeichnet, dass** der Härter ein Amin mit mindestens einer HNR₃R₄ -Gruppierung ist, wobei R₃ und R₄ unabhängig voneinander H, aliphatische, aromatische, aliphatisch-aromatische, cycloaliphatische oder heterocyclische Gruppen sind, vorzugsweise H, C₁₋₈-Alkyl, C₆₋₁₄-Aryl, C₇₋₂₀-Aralkyl oder -Alkaryl oder C₅₋₈-Cycloalkyl, wobei R₃ und R₄ nicht gleichzeitig H sind, und R₃ und R₄ zusammen ein cycloaliphatisches System, vorzugsweise einen 5 - 8-gliedirgen Ring, bilden können.

23. System nach einem der Ansprüchen 20 bis 22, **dadurch gekennzeichnet, dass** das Verhältnis der cyclischen Carbonatgruppen zu den HNR₃R₄ -Gruppierungen 20:1 bis 0,2:1, bevorzugt 10:1 bis 0,4:1, besonders bevorzugt 5:1 bis 0,5:1 und insbesondere 2:1 bis 0,5:1 beträgt.

24. System nach einem der Ansprüchen 20 bis 23, **dadurch gekennzeichnet, dass** das Amin monofunktionell, difunktionell oder polyfunktionell ist und aus Alkylaminen, Arylaminen, Aralkylaminen, Alkarylaminen, Cycloalkylaminen, Alkylendiaminen, Cycloalkylendiaminen, aminofunktionalisierten Polyalkylenglykolen, Polyaminen, Polyiminen, Polyamiden, Polyaminoamiden, Polyurethanen, Polyvinylaminen sowie Mischungen davon ausgewählt ist.

25. System nach einem der Ansprüchen 20 bis 24, **dadurch gekennzeichnet, dass** als Katalysator eine katalytisch wirksame Menge einer Base vorliegt.

26. System nach einem der Ansprüchen 20 bis 25, **dadurch gekennzeichnet, dass** als Zuschlagsstoffe Salze wie z.B. Magnesiumchlorid, Calciumchlorid, Calciumsulfat, Bariumsulfat; Anhydrit, Gips, Kreide; Oxide wie z.B. Siliciumdioxid, Aluminiumoxid; Hydroxide wie z.B. Magnesiumhydroxid, Aluminiumhydroxid; Farbpigmente wie z.B. Titandioxid, Eisenoxid; Kohlenstoff wie z.B. Ruß, Graphit, Blähgraphit; Metallpigmente wie z.B. Aluminium; wasseraufnehmende Füllstoffe wie z.B. Zement; Alumosilikate wie z.B. Talk, Kaolin und dergleichen; und als Hilfsstoffe Weichmacher, Stabilisatoren, UV-Absorber, Antioxidationsmittel, Entschäumungsmittel, Benetzungsadditive und dergleichen eingesetzt werden.

27. Verwendung des Bindemittels gemäß der Definition mindestens eines der Ansprüche 1 - 14 zur Herstellung einer gehärteten Beschichtung.

## Claims

1. Water-dispersible, cyclocarbonate-functionalized vinyl copolymer binder having structural groups derived from
i) at least one vinyl monomer (I) having at least one cyclic carbonate group,
ii) at least one vinyl monomer (II) having at least one emulsifier group and
iii) optionally at least one copolymerizable vinyl monomer (III), which differs from the monomers (I) and (II).

2. Binder according to Claim 1, **characterized in that** the cyclic carbonate group is a 5- or 6-membered ring, preferably a 2-oxo-1,3-dioxolane ring.

3. Binder according to Claim 1 or 2, **characterized in that** the monomer (I) is 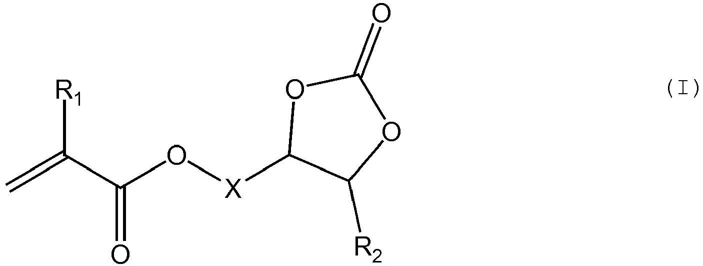 in which
R₁ is H or CH₃;
R₂ is H, alkyl, aryl, aralkyl or alkaryl, preferably H, C₁₋₈-alkyl, C₆₋₁₄-aryl, C₇₋₂₀-aralkyl or -alkaryl, and in particular is H;
X is alkylene, arylene, aralkylene or alkarylene, which optionally contain (poly)ester, (poly)ether, (poly)amide, (poly)urethane and/or (poly)carbonate groups, preferably C₁₋₈-alkylene, in particular methylene.

4. Binder according to Claim 3, **characterized in that** the monomer (I) has a molecular weight of 172 to 1500.

5. Binder according to any of Claims 1 - 4, **characterized in that** the emulsifier group is a nonionic or an ionic group and the monomer (II) has a molecular weight of 88 to 1500.

6. Binder according to Claim 5, **characterized in that**, in the case of a nonionic emulsifier group, the monomer (II) is selected from vinyl ethers, allyl ethers, isoprenyl ethers and (meth)acrylates of diols, preferably C₂₋₈-diols, or from (poly) alkylene glycols, and mixtures thereof, it being possible for the terminal OH groups to be substituted in each case by C₁₋₈-alkoxy groups and for the diol and (poly)alkylene glycol radicals to have in each case (poly)ester groups in the chain.

7. Binder according to Claim 5, **characterized in that** the ionic emulsifier group comprises a sulphate, sulphonate, phosphate and/or phosphonate group.

8. Binder according to Claim 5 or 7, **characterized in that** the ionic emulsifier group comprises a quaternary ammonium group.

9. Binder according to any of Claims 1 - 8, **characterized in that** the copolymerizable vinyl monomer (III) is selected from conjugated dienes, vinylaromatics, vinyl halides, vinyl esters and vinyl ethers, heterocyclic vinyl compounds, (meth)acrylates, (meth)acrylic acid, (meth)acrylamide, (meth)acrylonitrile, esters of monoethylenically unsaturated dicarboxylic acids and mixtures thereof, preferably from C₁₋₈-alkyl (meth) acrylates, C₆₋₁₄-aryl (meth) acrylates, C₇₋₂₀-aralkyl (meth)acrylates and styrene.

10. Binder according to Claim 9, **characterized in that** the monomer (III) has a molecular weight of 42 to 1000.

11. Binder according to any of Claims 1 - 10, having an average molecular weight (Mₙ) of 260 to 2 000 000, preferably of 2000 to 1 000 000 and in particular of 5000 to 500 000.

12. Binder according to any of Claims 1 - 11 having structural groups derived from
3 to 96 mol% of monomer (I),
3 to 96 mol% of monomer (II) and
0 to 96 mol% of monomer (III).

13. Binder according to any of Claims 1 - 12, **characterized in that** substantially no carboxylate groups are present in the binder, preferably not more than 5 mol% of carboxylate groups, particularly preferably not more than 1 mol% and in particular not more than 0.5 mol% of carboxylate groups.

14. Binder according to any of Claims 1 - 13, **characterized in that** the monomers (II) and (III) contain substantially no groups reactive with cyclic carbonate groups, preferably not more than 5 mol% and in particular not more than 1 mol% of reactive groups.

15. Process for the preparation of the binder according to the definition of at least one of the preceding claims, **characterized in that** the monomers (I), (II) and optionally (III) are subjected to free radical copolymerization.

16. Process according to Claim 15, **characterized in that** the polymerization is effected by adding a mixture of the monomers, optionally together with a free radical initiator, dropwise to a boiling solvent, whereupon the solvent is distilled off, the binder obtained is transferred to the aqueous phase and ionizable emulsifier groups are converted into the ionic form.

17. Process according to Claim 15, **characterized in that** the polymerization takes place by direct copolymerization in water of a mixture of the monomers, optionally together with a water-soluble free-radical initiator.

18. Aqueous dispersion comprising at least one binder according to the definition of any of Claims 1 - 14 and water.

19. Aqueous dispersion according to Claim 18, having a solids content of at least 10% by weight, preferably at least 20% by weight and in particular at least 30% by weight.

20. System comprising at least one binder according to the definition of any of Claims 1 - 14, water and at least one curing agent and optionally catalysts, additives and/or auxiliaries.

21. System according to Claim 20, **characterized in that** it is a two-component system, preferably having a curing component separated from the other components.

22. System according to Claim 20 or 21, **characterized in that** the curing agent is an amine having at least one HNR₃R₄ group, in which R₃ and R₄, independently of one another, are H, aliphatic, aromatic, aliphatic-aromatic, cycloaliphatic or heterocyclic groups, preferably H, C₁₋₈-alkyl, C₆₋₁₄-aryl, C₇₋₂₀-aralkyl or -alkaryl or C₅₋₈-cycloalkyl, in which R₃ and R₄ are not simultaneously H, and R₃ and R₄ together may form a cycloaliphatic system, preferably a 5-8-membered ring.

23. System according to any of Claims 20 to 22, **characterized in that** the ratio of the cyclic carbonate groups to the HNR₃R₄ groups is 20:1 to 0.2:1, preferably 10:1 to 0.4:1, particularly preferably 5:1 to 0.5:1 and in particular 2:1 to 0.5:1.

24. System according to any of Claims 20 to 23, **characterized in that** the amine is monofunctional, difunctional or polyfunctional and selected from alkylamines, arylamines, aralkylamines, alkarylamines, cycloalkylamines, alkylenediamines, cycloalkylenediamines, amino functionalized polyalkylene glycols, polyamines, polyimines, polyamides, polyaminoamides, polyurethanes, polyvinylamines and mixtures thereof.

25. System according to any of Claims 20 to 24, **characterized in that** a catalytically active amount of a base is present as a catalyst.

26. System according to any of Claims 20 to 25, **characterized in that** additives used are salts, such as, for example, magnesium chloride, calcium chloride, calcium sulphate, barium sulphate; anhydrite, gypsum, chalk; oxides, such as, for example, silica, alumina; hydroxides, such as, for example magnesium hydroxide, aluminium hydroxide; coloured pigments, such as, for example, titanium dioxide, iron oxide; carbon, such as, for example, carbon black, graphite, exfoliated graphite; metal pigments, such as, for example, aluminium; water-absorbing fillers, such as, for example, cement; aluminosilicates, such as, for example, talc, kaolin and the like; and auxiliaries used are plasticizers, stabilizers, UV absorbers, antioxidants, antifoams, wetting additives and the like.

27. Use of the binder according to the definition of at least one of Claims 1 - 14 for the production of a hardened coating

## Revendications

1. Liant à base de copolymère de vinyle à fonctionnalisation cyclocarbonate, dispersible dans l'eau, comprenant des groupes constitutifs dérivés de
i) au moins un monomère de vinyle (I) contenant au moins un groupe carbonate cyclique,
ii) au moins un monomère de vinyle (II) contenant au moins un groupe émulsifiant, et
iii) éventuellement au moins un monomère de vinyle copolymérisable (III) qui est différent des monomères (I) et (II).

2. Liant selon la revendication 1, **caractérisé en ce que** le groupe carbonate cyclique est un cycle à 5 ou 6 éléments, de préférence un cycle 2-oxo-1,3-dioxolane.

3. Liant selon la revendication 1 ou 2, **caractérisé en ce que** le monomère (I) est 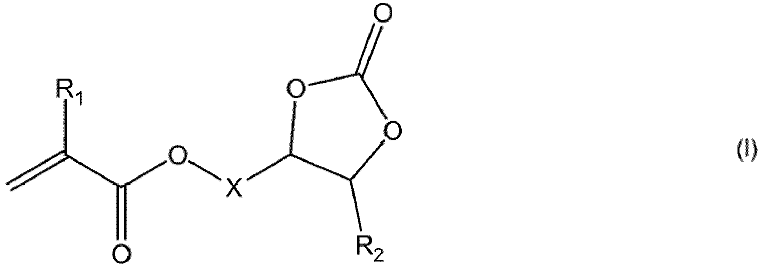 avec
R₁ = H ou CH₃ ;
R₂ = H, alkyle, aryle, aralkyle ou alkaryle, de préférence H, alkyle en C₁₋₈, aryle en C₆₋₁₄, aralkyle ou alkaryle en C₇₋₂₀, et notamment H ;
X = alkylène, arylène, aralkylène ou alkarylène, qui contiennent éventuellement des groupes (poly)ester, (poly)éther, (poly)amide, (poly)uréthane et/ou (poly) carbonate, de préférence alkylène en C₁₋₈, notamment méthylène.

4. Liant selon la revendication 3, **caractérisé en ce que** le monomère (I) présente un poids moléculaire de 172 à 1 500.

5. Liant selon l'une quelconque des revendications 1 à 4, **caractérisé en ce que** le groupe émulsifiant est un groupe non ionique ou ionique et le monomère (II) présente un poids moléculaire de 88 à 1 500.

6. Liant selon la revendication 5, **caractérisé en ce que** le monomère (II) dans le cas d'un groupe émulsifiant non ionique est choisi parmi les éthers de vinyle, les éthers d'allyle, les éthers d'isoprényle et les esters de l'acide (méth)acrylique de diols, de préférence de diols en C₂₋₈, ou de (poly) alkylène glycols, ainsi que leurs mélanges, les groupes OH terminaux pouvant à chaque fois être substitués par des groupes alcoxy en C₁₋₈ et les radicaux diol et (poly)alkylène glycol pouvant à chaque fois comprendre des groupes (poly)ester dans la chaîne.

7. Liant selon la revendication 5, **caractérisé en ce que** le groupe émulsifiant ionique comprend un groupe sulfate, sulfonate, phosphate et/ou phosphonate.

8. Liant selon la revendication 5 ou 7, **caractérisé en ce que** le groupe émulsifiant ionique comprend un groupe ammonium quaternaire.

9. Liant selon l'une quelconque des revendications 1 à 8, **caractérisé en ce que** le monomère de vinyle copolymérisable (III) est choisi parmi les diènes conjugués, les composés aromatiques de vinyle, les halogénures de vinyle, les esters de vinyle et les éthers de vinyle, les composés de vinyle hétérocycliques, les esters de l'acide (méth)acrylique, l'acide (méth)acrylique, le (méth)acrylamide, le (méth)acrylonitrile, les esters d'acides dicarboxyliques monoéthyléniquement insaturés, ainsi que leurs mélanges, de préférence parmi les esters alkyliques en C₁₋₈ de l'acide (méth)acrylique, les esters aryliques en C₆₋₁₄ de l'acide (méth) acrylique, les esters aralkyliques en C₇₋₂₀ de l'acide (méth) acrylique et le styrène.

10. Liant selon la revendication 9, **caractérisé en ce que** le monomère (III) présente un poids moléculaire de 42 à 1 000.

11. Liant selon l'une quelconque des revendications 1 à 10, ayant un poids moléculaire moyen (Mₙ) de 260 à 2 000 000, de préférence de 2 000 à 1 000 000, et notamment de 5 000 à 500 000.

12. Liant selon l'une quelconque des revendications 1 à 11, contenant
3 à 96 % en moles de groupes constitutifs dérivés du monomère (I),
3 à 96 % en moles de groupes constitutifs dérivés du monomère (II), et
0 à 96 % en moles de groupes constitutifs dérivés du monomère (III).

13. Liant selon l'une quelconque des revendications 1 à 12, **caractérisé en ce qu'**essentiellement aucun groupe carboxylate n'est présent dans le liant, de préférence pas plus de 5 % en moles de groupes carboxylate, de manière particulièrement préférée pas plus de 1 % en moles et notamment pas plus de 0,5 % en moles de groupes carboxylate.

14. Liant selon l'une quelconque des revendications 1 à 13, **caractérisé en ce que** les monomères (II) et (III) ne contiennent essentiellement pas de groupes réactifs avec les groupes carbonate cycliques, de préférence pas plus de 5 % en moles et notamment pas plus de 1 % en moles de groupes réactifs.

15. Procédé de fabrication du liant selon la définition d'au moins l'une quelconque des revendications précédentes, **caractérisé en ce que** les monomères (I), (II) et éventuellement (III) sont copolymérisés par voie radicalaire.

16. Procédé selon la revendication 15, **caractérisé en ce que** la polymérisation a lieu par ajout goutte à goutte d'un mélange des monomères, éventuellement conjointement avec un initiateur radicalaire, dans un solvant en ébullition, puis élimination du solvant par distillation, transfert du liant obtenu dans la phase aqueuse et transfert des groupes émulsifiant ionisables en la forme ionique.

17. Procédé selon la revendication 15, **caractérisé en ce que** la polymérisation a lieu par copolymérisation directe dans de l'eau d'un mélange des monomères, éventuellement conjointement avec un initiateur radicalaire soluble dans l'eau.

18. Dispersion aqueuse, comprenant au moins un liant selon la définition de l'une quelconque des revendications 1 à 14 et de l'eau.

19. Dispersion aqueuse selon la revendication 18, ayant une teneur en solides d'au moins 10 % en poids, de préférence d'au moins 20 % en poids et notamment d'au moins 30 % en poids.

20. Système, comprenant au moins un liant selon la définition de l'une quelconque des revendications 1 à 14, de l'eau et au moins un durcisseur, ainsi qu'éventuellement des catalyseurs, des additifs et/ou des adjuvants.

21. Système selon la revendication 20, **caractérisé en ce qu'**il s'agit d'un système bicomposant, de préférence comprenant un composant durcisseur séparé des autres composants.

22. Système selon la revendication 20 ou 21, **caractérisé en ce que** le durcisseur est une amine comprenant au moins un groupe HNR₃R₄, R₃ et R₄ étant indépendamment l'un de l'autre H, des groupes aliphatiques, aromatiques, aliphatiques-aromatiques, cycloaliphatiques ou hétérocycliques, de préférence H, alkyle en C₁₋₈, aryle en C₆₋₁₄, aralkyle ou alkaryle en C₇₋₂₀ ou cycloalkyle en C₅₋₈, R₃ et R₄ ne représentant pas simultanément H, et R₃ et R₄ pouvant former ensemble un système cycloaliphatique, de préférence un cycle de 5 à 8 éléments.

23. Système selon l'une quelconque des revendications 20 à 22, **caractérisé en ce que** le rapport entre les groupes carbonate cycliques et les groupes HNR₃R₄ est de 20:1 à 0,2:1, de préférence de 10:1 à 0,4:1, de manière particulièrement préférée de 5:1 à 0,5:1, et notamment de 2:1 à 0,5:1.

24. Système selon l'une quelconque des revendications 20 à 23, **caractérisé en ce que** l'amine est monofonctionnelle, difonctionnelle ou polyfonctionnelle, et choisie parmi les alkylamines, les arylamines, les aralkylamines, les alkarylamines, les cycloalkylamines, les alkylène diamines, les cycloalkylène diamines, les polyalkylène glycols à fonctionnalisation amino, les polyamines, les polyimines, les polyamides, les polyaminoamides, les polyuréthanes, les polyvinylamines, ainsi que leurs mélanges.

25. Système selon l'une quelconque des revendications 20 à 24, **caractérisé en ce qu'**une quantité catalytiquement efficace d'une base est présente en tant que catalyseur.

26. Système selon l'une quelconque des revendications 20 à 25, **caractérisé en ce que** des sels, tels que p. ex. le chlorure de magnésium, le chlorure de calcium, le sulfate de calcium, le sulfate de baryum ; l'anhydrite, le gypse, la craie ; des oxydes, tels que p. ex. le dioxyde de silicium, l'oxyde d'aluminium ; des hydroxydes, tels que p. ex. l'hydroxyde de magnésium, l'hydroxyde d'aluminium ; des pigments colorés, tels que p. ex. le dioxyde de titane, l'oxyde de fer ; du carbone, tel que p. ex. le noir de carbone, le graphite, le graphite expansé ; des pigments métalliques, tels que p. ex. l'aluminium ; des charges absorbant l'eau, telles que p. ex. le ciment ; des alumosilicates, tels que p. ex. le talc, le kaolin et analogues sont utilisés en tant qu'additifs ; et des plastifiants, des stabilisateurs, des absorbeurs UV, des antioxydants, des agents antimousse, des additifs de mouillage et analogues sont utilisés en tant qu'adjuvants.

27. Utilisation du liant selon la définition de l'une quelconque des revendications 1 à 14 pour la fabrication d'un revêtement durci.
